# EUROPÄISCHE PATENTSCHRIFT

(11) **EP 0 393 038 B1**
(45) Veröffentlichungstag und Bekanntmachung des Hinweises auf die Patenterteilung: **10.03.1993**
(21) Anmeldenummer: 88907239.3
(22) Anmeldetag: 31.08.1988
(51) Int. Cl.: G01N 27/417

(54) **ELEKTROCHEMISCHER MESSFÜHLER**
ELECTROCHEMICAL MEASUREMENT SENSOR
CAPTEUR ELECTROCHIMIQUE DE MESURE

(30) Priorität: 17.10.1987 DE 3735298
(43) Veröffentlichungstag der Anmeldung: 24.10.1990
(73) Patentinhaber: ROBERT BOSCH GMBH, 70442 Stuttgart (DE)
(72) Erfinder: FRIESE, Karl-Hermann, D-7250 Leonberg (DE); WEYL, Helmut, D-7141 Schwieberdingen (DE); WIELAND, Werner, D-7014 Kornwestheim (DE); WIEDENMANN, Hans-Martin, D-7000 Stuttgart 1 (DE)
(86) Internationale Anmeldenummer: DE8800530
(87) Internationale Veröffentlichungsnummer: WO8903529

(56) Entgegenhaltungen:
- US-A- 4 164 462
- US-A- 4 359 374
- Patent Abststracts of Japan, vol. 7, No. 30P173 abstract of JP 57-182642, publ. 10-11-1982 see the whole document

## Beschreibung

### Stand der Technik

Die Erfindung betrifft einen elektrochemischen Meßfühler für die Bestimmung des Sauerstoffgehaltes in Abgasen nach der Gattung des Hauptanspruchs.

Es ist allgemein bekannt, für die Bestimmung des Sauerstoffgehaltes in Abgasen, insbesondere in Abgasen von Verbrennungsmotoren, elektrochemische Meßfühler zu verwenden.

Bekannte derartige Meßfühler beruhen auf dem Prinzip der Sauerstoffkonzentrationskette mit einem ionenleitenden Festelektrolyten. Sie bestehen z. B. aus einem einseitig geschlossenen Rohr aus einem ionenleitenden Festelektrolyten, auf dessen äußerer, dem Abgas zugewandten Oberfläche sich eine Elektrode befindet, die z. B. aus einer porösen Platinschicht bestehen kann, die gleichzeitig eine möglichst weitgehende Einstellung des thermodynamischen Gleichgewichts katalysiert. Eine derartige Einstellung des Gasgleichgewichts ist erforderlich, da sich das Gas im allgemeinen nicht von vornherein im thermodynamischen Gleichgewicht befindet, diese aber Voraussetzung dafür ist, daß bei λ = 1 ein möglichst scharfer Potentialsprung auftritt oder im Fall einer polarographischen Grenzstromsonde (vgl. DE-PS 27 11 880) der jweilige tatsächliche λ-Wert erfaßt wird.

Die Elektrodenschicht, z. B. Platinschicht ist bei diesen Meßfühlern sehr dünn und obwohl sie im allgemeinen eine poröse keramische Schutzschicht trägt, unterliegt sie doch nach längerem Gebrauch einem korrosiven Angriff durch einige der Abgasbestandteile, zum Beispiel Ruß, Blei sowie Phosphor- und Schwefelverbindungen. Dieser korrosive Angriff findet auf der gesamten Fläche des Meßfühlers statt, ist aber besonders stark gegen das offene Ende hin, wo sich infolge einer niedrigeren Temperatur diese schädlichen Bestandteile leichter niederschlagen und nicht so leicht wieder verflüchtigen und wo die Elektrodenschicht unter Umständen nicht mehr vollständig von der porösen und damit ohnehin nur begrenzt wirksamen Schutzschicht bedeckt ist.

Aus der DE-AS 26 19 746 ist es bekannt, zur Vermeidung der erwähnten Nachteile der bekannten Meßfühler auf die äußere, dem Abgas zugewandte Oberfläche des Festelektrolytkörpers oder Sondensteines eine elektronenleitende Schicht in Form einer Leiterbahn aus einem Gemisch von elektronenleitendem, die Einstellung des Gasgleichgewichtes katalysierendem Material und gegebenenfalls keramischem Material oder Glas als Stützgerüst, die sich vom geschlossenen Ende bis zum offenen Ende hin erstreckt, aufzubringen und den dem offenen Ende des Rohres zugewandten Teil der Leiterbahn mit einer Glasur zu bedecken, wobei zusätzlich die gesamte Oberfläche des Meßfühlers als äußerste Schicht eine poröse keramische Deckschicht aus zum Beispiel Magnesiumspinell oder Aluminiumoxid tragen kann.

Es hat sich jedoch gezeigt, daß die Abdeckung der Leiterbahn mit einer Glasur, zum Beispiel aus Kalium-Aluminium-Silikat, Barium-Aluminium-Silikat oder Barium-Calcium-Aluminium-Silikaten, wie in der DE-AS 26 19 746 beschrieben, mehrere schwerwiegende Nachteile aufweist. Nachteilig an der Verwendung derartiger Deckschichten ist zunächst, daß diese Deckschichten nur nach dem Sinterprozeß aufgetragen werden können. Nachteilig ist ferner, daß in den auf den Glasuren erzeugten Deckschichten aufgrund ihrer von der Sondenkeramik sehr unterschiedlichen stofflichen Zusammensetzung und damit unterschiedlichen Wärmeausdehnung beim Betrieb der Meßfühler leicht Risse auftreten, die lokal die Leiterbahnen leicht einem korrisiven Angriff aussetzen.

Aus der JP-OS 57-182 642 ist es bekannt, das Festelektrolytrohr, also den Träger der fingerförmigen Abgassonde, und die Elektrodenschutzschicht aus demselben Material auszubauen. Hier wird jedoch nicht zwischen Außenelektrode und deren anschlußseitiger Fortsetzung (= Leiterbahn) unterschieden, sondern lediglich ein poröser Platinfilm vorgesehen, der beide Funktionen - als Elektrode sowie als elektrischer Anschluß derselben - übernimmt.

### Vorteile der Erfindung

Demgegenüber kennzeichnet sich der erfindungsgemäße Meßfühler dadurch, daß sowohl Festelektrolyt, sich an die Außenelektrode anschließende Leiterbahn sowie Deckschicht aus einer dicht sinternden Keramik aufgebaut sind. Dadurch wird eine vollständige Integration der Leiterbahn in Sondenstein dicht unterhalb der Sondensteinoberfläche ereicht und somit ein störungsfreier Dauerbetrieb des Meßfühlers auch in sehr fetten Abgasen (λ ≦ 0,8) bei hohen Temperaturen unter starker Rußbildung ermöglicht, da einerseits Kurzschlüsse zwischen Leiterbahn und Gehäuse vermieden werden können, d. h. das Sensorsignal nicht durch eingestreute Fremdpotentiale verfälscht werden kann, und andererseits eine Korrosion der Leiterbahn durch solche Niederschläge sicher verhindert wird.

Der in der Regel fingerförmige Sondenstein des erfindungsgemäßen Meßfühlers kann aus einem der zur Herstellung derartiger Meßfühler üblichen ionenleitenden Festelektrolyten bestehen. In typischer Weise besteht der Sondenstein beispielsweise aus stabilisiertem Zirkondioxid, z. B. aus mit Yttriumoxid oder Calciumoxid stabilisiertem ZrO₂. Außer aus stabilisiertem ZrO₂ kann der Sondenstein beispielsweise jedoch auch aus Festelektrolyten auf Basis von CeO₂, HfO₂ oder ThO₂ aufgebaut sein, die z. B. mit CaO, MgO, SrO, Yb₂O₃ und/oder Sc₂O₃ stabilisiert sein können.

Besteht der Sondenstein somit beispielsweise aus mit 5 Mol-% Yttriumoxid stabilisiertem ZrO₂, so wird zur Erzeugung der Deckschicht ebenfalls ein derart stabilisiertes ZrO₂ verwendet.

Die prozentuale Zusammensetzung der zur Ausbildung der Deckschicht verwendeten Rohstoffmischung braucht jedoch nicht genau der Zusammensetzung des Sondensteines zu entsprechen. Wesentlich ist allein, daß die gleichen oder gleichartige Rohstoffe eingesetzt werden, wobei die prozentuale Zusammensetzung auch etwas voneinander abweichen kann. Diese bedeutet, daß der Stabilisatorgehalt der zur Ausbildung der Deckschicht verwendeten Rohstoffmischung, z. B. um bis zu 20 % vom Stabilisatorgehalt der Rohstoffmischung des Sondensteins abweichen kann.

Auch kann zur Erzeugung der Deckschicht eine Rohstoffmischung mit erhöhter Sinteraktivität verwendet werden. Eine erhöhte Sinteraktivität erreicht man z. B. durch eine verschärfte Aufmahlung und/oder durch Zusatz eines silikatischen Flußmittels, z. B. durch Zusatz von Al-, Ba- oder Ba-Al-Silikat. Derartige Zusätze können der Rohstoffmischung z. B. in Mengen von etwa 5 Gew.-%, bezogen auf die Rohstoffmischung zugegeben werden.

In vorteilhafter Weise werden zur Herstellung der Deckschichten Spritzsuspensionen oder Druckpasten verwendet, die sich wie folgt zusammensetzen:
(a) 32 bis 65 Gew.-% Festelektrolyt-Rohstoffmischung (Festelektrolytoxid + Stabilisatoroxid + ggf. Flußmittelzusätze)
(b) 1 bis 8 Gew.-% eines organischen Binders,
(c) 27 bis 67 Gew.-% anderer Zusätze, wie Lösungsmittel, Entschäumer, Dispergiermittel und Stellmittel in bekannten Kombinationen.

Typische geeignete organische Binder sind z. B. Polyvinylbutyral, Acrylharze und Cellulosederivate, wie z. B. Äthylcellulose.

Zur Bereitung der Spritzsuspensionen oder Druckpasten können außer Wasser auch organische Lösungsmittel eingesetzt werden. Die Suspensionen und Pasten können mittels üblicher Auftragsverfahren, wie z. B. Spritzen, Aufrollen und Drucken aufgebracht werden.

Vorzugsweise liegt die Schichtstärke der erzeugten Deckschichten bei 5 bis 50 µm. Als besonders vorteilhaft hat es sich in der Regel enwiesen, die Schichtstärke der Deckschicht der Leiterbahnstärke weitgehend anzupassen, die Deckschicht dabei aber nicht dünner als die Leiterbahn werden zu lassen.

Die Leiterbahn besteht aus einem der üblicherweise für die Erzeugung von Leiterbahnen eingesetzten elektronenleitenden Material, z. B. Platin, einer Platinlegierung, z. B. einer Platin-Rhodiumlegierung oder einem Edelmetall-Cermet, z. B. einem Platin-Cermet.

Erfindungsgemäß weist die Leiterbahn ein sinteraktives Stützgerüst auf, das eine weitgehend porenfreie Struktur der Leiterbahn ermöglicht. Zur Ausbildung von sinteraktiven Stützgerüsten geeignete Stoffe sind z. B. stabilisierte Zirkondioxidpulver. In typischer Weise kann die Leiterbahn somit z. B. zu etwa 60 - 80 Vol.-% aus einer Pt/Rh-Legierung und zu etwa 40 - 20 Vol.-% aus einem stabilisierten ZrO₂-Pulver bestehen.

Gegebenenfalls kann vor dem Aufbringen der Deckschicht auf die Leiterbahn auf diese zuvor noch eine zusätzliche Isolationsschicht, z. B. aus porös sinterndem Al₂O₃ aufgebracht werden, die die elektrische Isolation der Leiterbahn gegenüber dem Sondengehäuse auch bei erhöhten Temperaturen (> 500 ^{°}C) gewährleistet.

## Patentansprüche

1. Elektrochemischer Meßfühler für die Bestimmung des Sauerstoffgehaltes in Abgasen, insbesondere von Verbrennungsmotoren, mittels einer Sauerstoffkonzentrationskette mit einem Sondenstein aus eniem ionenleitenden Festelektrolyten in Form enies einseitig geschlossenen Rohres, einer Innenelektrode und einer auf der äußeren Oberfläche des Sondensteines angeordneten Außenelektrode mit einer anschlußseitigen Leiterbahn, von der mindestens der dem offenen Ende des Sondensteines zugewandte Teil eine dicht sinternde Deckschicht aus der Rohstoffmischung der Sondensteinkeramik mit gleicher oder erhöhter Sinteraktivität trägt, dadurch gekennzeichnet, daß das Ausgangsmaterial für die Leiterbahn sinteraktives Material enthält, das beim Sinterprozeß ein sinteraktives Stützgerüst bildet.

2. Elektrochemischer Meßfühler nach Anspruch 1, dadurch gekennzeichnet, daß die Deckschicht eine Schichtstärke von 5 bis 50µm aufweist.

3. Elektrochemischer Meßfühler nach Anspruch 1, dadurch gekennzeichnet, daß die Schichtstärke der Deckschicht mindestens der Leiterbahnschichtstärke entspricht.

4. Elektrochemischer Meßfühler nach Anspruch 1, dadurch gekennzeichnet, daß das Ausgangsmaterial für die Deckschicht im wesentlichen aus stabilisiertem ZrO₂ und/oder aus einem Gemisch von ZrO₂ und Stabilisatoroxiden - gegebenenfalls mit einem Flußmittelzusatz - besteht.

5. Elektrochemischer Meßfühler nach Anspruch 4, dadurch gekennzeichnet, daß das Ausgangsmaterial für die Deckschicht als Flußmittelzusatz ein Erdalkali-Aluminiumoxid-Silikat und/oder Komponenten, die beim Sintern ein Erdalkali-Aluminiumoxid-Silikat bilden, enthält.

6. Elektrochemischer Meßfühler nach Anspruch 1, dadurch gekennzeichnet, daß die anschlußseitige Leiterbahn der Außenelektrode eine Cermet-Leiterbahn ist und diese ein Stützgerüst aus stabilisiertem Zirkondioxid aufweist, das vor dem Sintern mindestens die gleiche Sinteraktivität wie der Sondenstein selbst aufweist.

## Claims

1. Electrochemical sensor for the determination of the oxygen content in exhaust gases, in particular of internal-combustion engines, by means of an oxygen concentration cell with a probe element comprising an ionically conductive solid electrolyte in the form of a tube, closed at one end, an inner electrode and an outer electrode, arranged on the outer surface of the probe element, with a terminal-side conductor track, of which at least the part facing the open end of the probe element bears a compactly sintering cover layer of the raw material of the probe element ceramic having the same or increased sintering activity, characterised in that the starting material for the conductor track contains sinter-active material, which forms a sinter-active supporting framework in the sintering process.

2. Electrochemical sensor according to Claim 1, characterised in that the cover layer has a layer thickness of 5 to 50 µm.

3. Electrochemical sensor according to Claim 1, characterised in that the layer thickness of the cover layer corresponds at least to the conductor track layer thickness.

4. Electrochemical sensor according to Claim 1, characterised in that the starting material for the cover layer substantially consists of stabilized ZrO₂ and/or a mixture of ZrO₂ and stabilizer oxides - if appropriate with a flux additive.

5. Electrochemical sensor according to Claim 4, characterised in that the starting material for the cover layer contains as flux additive an alkaline earth metal-aluminium oxide silicate and/or components which form an alkaline earth metal-aluminium oxide silicate during sintering.

6. Electrochemical sensor according to Claim 1, characterised in that the terminal-side conductor track of the outer electrode is a cermet conductor track and the latter has a supporting framework of stabilized zirconium dioxide, which before the sintering has at least the same sintering activity as the probe element itself.

## Revendications

1. Capteur électrochimique de mesure servant à déterminer la teneur en oxygène de gaz d'échappement, en particulier, de ceux émis par des moteurs à combustion, au moyen d'une chaîne de concentration d'oxygène comprenant un corps de sonde fait d'un électrolyte solide conducteur d'ions, en forme de tube fermé à une extrémité, une électrode interne et une électrode externe placées à la surface externe du corps de sonde et reliée à une piste conductrice du côté de raccordement, dont au moins la partie en regard de l'extrémité ouverte du corps de sonde porte une couche de couverture frittée réalisée à partir du mélange des composants de la céramique du corps de sonde, avec une activité de frittage égale ou plus élevée, caractérisé en ce que le matériau à partir duquel est réalisée la piste conductrice contient une matière active de frittage qui produit par frittage une armature de protection.

2. Capteur électrochimique selon la revendication 1, caractérisé en ce que la couche de couverture a une épaisseur comprise entre 5 et 50 microns.

3. Capteur électrochimique selon la revendication 1, caractérisé en ce que l'épaisseur de la couche de couverture est au moins égale à celle de la piste conductrice.

4. Capteur électrochimique selon la revendication 1, caractérisé en ce que la matière première utilisée pour réaliser la couche de couverture est constituée essentiellement de ZrO₂ stabilisé et/ou d'un mélange de ZrO₂ et d'oxydes stabilisants éventuellement avec addition d'un fondant.

5. Capteur électrochimique selon la revendication 4, caractérisé en ce que la matière première utilisée pour réaliser la couche de couverture contient comme fondant un silicate d'oxyde d'aluminium et d'un alcalino-terreux et/ou des composants qui par frittage produisent un silicate d'oxyde d'aluminium et d'un alcalino-terreux.

6. Capteur électrochimique selon la revendication 1, caractérisé en ce que la piste conductrice, du côté où elle se raccorde à l'électrode externe est une piste conductrice en cermet qui comporte une armature de protection en dioxyde de zirconium stabilisé présentant, avant frittage, une activité de frittage au moins égale à celle du corps de la sonde.
